# FASCICULE DE BREVET EUROPEEN

(11) **EP 3 164 690 B1**
(45) Date de publication et mention de la délivrance du brevet: **11.09.2019**
(21) Numéro de dépôt: 15736423.3
(22) Date de dépôt: 03.07.2015
(51) Int. Cl.: G01N 3/20

(54) **DISPOSITIF DE TEST MECANIQUE EN FLEXION PURE ET PROCEDE DE MISE EN OEUVRE**
MECHANISCHE PRÜFVORRICHTUNG FÜR REINE BIEGUNG UND VERFAHREN ZUR IMPLEMENTIERUNG DAVON
PURE BENDING MECHANICAL TEST DEVICE, AND METHOD FOR IMPLEMENTING SAME

(30) Priorité: 04.07.2014 FR 1456479
(43) Date de publication de la demande: 10.05.2017
(73) Titulaire: Université Grenoble Alpes, 38400 Saint-Martin-d'Hères (FR)
(72) Inventeur: CONNESSON, Nathanael, Le Récital, 38400 Saint Martin d'Hères (FR); PAYAN, Yohan, F-38580 Allevard (FR); ANTEHRIEU, Gabriel, F-38000 Grenoble (FR); FAVIER, Denis, F-38700 La Tronche (FR)
(74) Mandataire: Novagraaf Technologies
(86) Numéro de dépôt international: PCT/EP2015/065250
(87) Numéro de publication internationale: WO 2016/001426

(56) Documents cités:
- FR-A1- 2 843 633
- GB-A- 409 805
- US-A- 2 170 640
- US-A1- 2013 327 152

## Description

### DOMAINE TECHNIQUE

L'invention porte sur un dispositif de test mécanique en flexion pure, encore appelée flexion circulaire, et un procédé de test mettant en oeuvre un tel dispositif.

Le terme de flexion pure est un terme consacré dans la science des matériaux et les essais de flexion pure sont largement utilisés en mécanique expérimentale. La théorie les décrivant théoriquement est bien établie. Ces tests font l'objet de nombreuses études analytiques et numériques. Les essais de flexion pure induisent un gradient de contrainte dans l'épaisseur des éprouvettes sollicitées (allant de la traction à la compression locale) alors que le moment de flexion appliqué est homogène le long de l'éprouvette.

Dans la pratique, lors du test en flexion d'une éprouvette, l'éprouvette est soumise à des efforts parasites en cisaillement et en torsion. Il est toutefois possible de parler de 'flexion pure' lorsque les moments induits par ces efforts parasites sont rendus négligeables devant le moment de flexion auquel est soumis l'éprouvette.

### ÉTAT DE LA TECHNIQUE ANTÉRIEURE

Afin de pouvoir comparer les données expérimentales aux résultats théoriques/numériques, maîtriser la sollicitation à laquelle l'échantillon est soumis est primordial. Pour cette raison, un soin particulier doit être apporté lors des expériences, afin de garantir que l'intégralité de la zone d'intérêt de l'échantillon soit bien sollicitée en flexion pure lors des essais. En effet, si des efforts parasites sont induits par le dispositif (torsion, efforts tranchants), le moment de flexion ne sera pas homogène le long de la zone utile de l'éprouvette. La méconnaissance de la sollicitation exacte locale à laquelle est soumis l'échantillon rend les résultats inexploitables. En pratique, il est très difficile de solliciter parfaitement une éprouvette en flexion pure. De nombreuses précautions doivent être prises. On considérera ici que l'éprouvette est sollicitée en flexion pure lorsque les efforts parasites seront négligeables et n'entravent pas l'exploitation des résultats expérimentaux.

Divers dispositifs de flexion pure ont été décrits dans la littérature scientifique et dans les brevets.

Dans certains dispositifs de flexion « quatre points » de l'art antérieur, une éprouvette (encore appelée échantillon) est disposée en suspension entre deux points d'un support fixe. Deux appuis ponctuels d'une pièce mobile sont mis en contact avec l'éprouvette entre les deux points du support fixe et des efforts sont appliqués sur l'éprouvette. L'éprouvette est alors déformée en flexion pure entre les deux appuis ponctuels. Cependant, dans ces dispositifs, un seuil de déplacement maximal en flexion pure du centre de l'échantillon est inférieur à son épaisseur ou de l'ordre de grandeur de celle-ci. Une flexion occasionnant un déplacement du centre de l'échantillon supérieur à ce seuil provoquerait un glissement de l'échantillon au niveau du support et fausserait les mesures du moment. Lors de l'étude des propriétés mécaniques d'échantillons élancés, un déplacement du centre de l'échantillon de cet ordre de grandeur ne permet pas de solliciter les échantillons dans un domaine de déformation suffisant : un système permettant de grands déplacements est nécessaire pour atteindre de hautes déformations. Ces mesures sont de premier intérêt pour des échantillons élancés ou fabriqués dans des matériaux super-élastiques, ou lorsque leur procédé de fabrication ne permet pas d'obtenir d'autres géométries. Dans le contexte de la présente demande, un échantillon élancé (encore appelé éprouvette élancée) doit être compris comme étant un échantillon dont le ratio longueur/diamètre est supérieur ou égal à 5, préférentiellement mais non limitativement entre 5 et 20, par exemple 8, 10 ou 12.

Certains autres dispositifs de flexion, par exemple ceux décrits ci-après, mettent en oeuvre un procédé de flexion « quatre points » dans lequel une éprouvette à tester est maintenue entre deux supports contrôlés en rotation. Cependant, ces dispositifs ne permettent de solliciter une partie de l'échantillon en flexion pure que pour de faibles déplacements et aucun ne semble en mesure d'atteindre de faibles rayons de courbure. Typiquement, ces dispositifs permettent d'atteindre des rayons de courbures de l'ordre de 10 cm.

Caractériser sous flexion pure des échantillons élancés requiert la capacité d'atteindre de petits rayons de courbure. Une telle aptitude n'est pas requise pour des éprouvettes trapues, c'est-à-dire par exemple de ratio longueur/diamètre inférieur à 5, ou lorsque l'essai ne nécessite pas d'atteindre de hautes déformations : lors d'un essai de flexion, pour un rayon de courbure fixé, plus le diamètre caractéristique de l'échantillon est grand, plus la déformation maximale subie par le matériau sera grande, typiquement en surface extérieure. Ainsi, pour atteindre le même état de déformation sur un petit échantillon, le rayon de courbure requis est bien plus faible.

Quelques publications ou dispositifs brevetés permettent d'étudier des échantillons de taille réduite.

Dans la littérature scientifique, le document Kyriakides & al (Localization in NiTi tubes under pure bending, N. Bechle, J. S. Kyriakides, International journal of solids and structures, 2014, Vol. 51, pp 967-980) présente des résultats sur des tubes de 3 mm de diamètre. Ce dispositif de flexion comporte cependant plusieurs limitations. Les actionneurs en rotation sont fixes : la longueur de matériau sollicité augmente au cours d'un essai de flexion. L'échantillon glisse dans des fourreaux à bille, ce qui induit des efforts de frottement dans l'axe des fourreaux. Cette cinématique, associée aux résistances au mouvement, fait varier le moment de flexion le long de l'éprouvette. Cette variation du moment le long de l'éprouvette évolue au cours de l'essai : les frottements ont peu d'impact pour une éprouvette peu déformée, c'est-à-dire quasi rectiligne, mais peuvent induire de larges variations du moment de flexion le long de l'éprouvette lorsque la forme de l'éprouvette déformée se rapproche d'un demi-cercle. Ce dispositif ne permet donc pas d'obtenir un moment de flexion pure. Ce phénomène impactera particulièrement les mesures pour de faibles rayons de courbure. De plus, les rayons de courbure atteignables sont trop importants pour des échantillons de diamètre de l'ordre d'1 mm ou moins.

Le dispositif décrit dans le document Hoefnagels & al (A miniaturized contactless pure-bending device for in-situ SEM failure analysis, J.P.M Hoefnagels, C.A. Buizer, M.G.D Geers, Expérimental and Applied Mechanics, 2011, Vol. 6, pp 587-596) permet en théorie de solliciter l'échantillon en flexion pure : le dispositif impose à l'échantillon une cinématique de ses extrémités correspondant à celle d'une flexion pure sous hypothèse d'un comportement mécanique homogène le long de l'éprouvette. La limite majeure de ce dispositif réside dans les hypothèses requises à la définition de la cinématique du système. En effet, si les propriétés mécaniques de l'échantillon sont hétérogènes, cas fréquemment rencontré expérimentalement, la cinématique imposée par le mécanisme n'induira pas une flexion pure le long de l'échantillon. Les efforts, l'état de déformation et l'état de contrainte locale dans le matériau sera alors inconnu et les résultats expérimentaux ne pourront être analysés correctement.

Le dispositif décrit dans le document FR2843633 remplit les conditions permettant de solliciter deux éprouvettes en flexion pure. Les moteurs qui sollicitent les deux éprouvettes sont soutenus par divers moyens, de sorte qu'ils puissent se déplacer librement dans l'espace. Cette liberté de déplacement leur permet d'éviter l'apparition d'efforts parasites, ce qui assure un état de contrainte homogène dans les échantillons sollicités. Cependant, plusieurs limitations sont imposées par ce système. Tout d'abord, dans la configuration où les moteurs sont suspendus par des câbles pour que les efforts dus aux déplacements des moteurs soient nuls, la longueur des câbles doit être théoriquement infinie et les câbles doivent être insensibles aux mouvements de l'air ambiant. Ceci rend donc le dispositif relativement encombrant, peu transportable, et peu adapté à une salle basse de plafond. De manière générale, ce dispositif est difficilement adaptable sur une machine d'essai classique. De plus, il est avant tout destiné à des échantillons de géométrie plane comme des plaques et nécessite de solliciter simultanément deux échantillons rigoureusement identiques (géométrie, homogénéité de matériau entre les deux échantillons, etc). Ces contraintes sont délicates à obtenir expérimentalement.

Le document US 2013/0327152 A1 décrit un dispositif de flambement dans lequel une éprouvette est soumise à des forces de compression. Les moments auxquels est soumise l'éprouvette sont différents le long de l'éprouvette car le moment résulte de la multiplication de l'effort par la distance.

L'invention vise donc à proposer un dispositif mécanique amélioré permettant de solliciter un échantillon, de préférence élancé, ou une éprouvette, de préférence élancée, en flexion.

Avantageusement, un tel dispositif est simple et peu coûteux.

### EXPOSÉ DE L'INVENTION

Ainsi, l'invention porte sur un dispositif de test mécanique en flexion en quatre points d'une éprouvette, ce dispositif comportant :
a) des moyens de maintien d'une première extrémité d'une éprouvette et des moyens de maintien d'une deuxième extrémité de l'éprouvette ;
b) des moyens de traction et des moyens de transformation pour transformer un mouvement de translation desdits moyens de traction en un mouvement de rotation ;
c) des moyens de conversion pour convertir ledit mouvement de rotation en une déformation en flexion de l'éprouvette, ces moyens de conversion comportant au moins un premier joint de cardan reliant lesdits moyens de transformation auxdits moyens de maintien de la première extrémité de l'éprouvette.

Par joint de cardan, on entend par exemple un exemple de réalisation d'une rotule à doigt.

De préférence, un arbre relie le premier joint de cardan aux moyens de maintien de la première extrémité de l'éprouvette.

Pendant la déformation en flexion d'une éprouvette, l'utilisation d'un joint de cardan combiné aux moyens de conversion permet de compenser les efforts parasites tranchants apparaissant dans l'éprouvette par un déplacement libre et de grande amplitude de l'extrémité d'une éprouvette. Ce déplacement s'opère jusqu'à la disparition de l'effort lui donnant lieu. Lorsque l'équilibre mécanique est atteint les efforts parasites en torsion et cisaillement dans l'éprouvette sont négligeables. Il est ainsi possible de tester des éprouvettes en flexion pure sur une plage de rayons de courbure particulièrement importante, depuis une géométrie linéaire jusqu'à des rayons de courbure très faibles, inférieure à 1 cm, sans que la déformation de l'éprouvette ne soit gênée par les composants du dispositif.

L'invention est de plus utilisable sur des échantillons filiformes de diamètre égal ou inférieur à 1 mm, par exemple compris entre 0,1 mm et 1 mm.

Au cours d'un test en flexion à l'aide du dispositif selon l'invention, la longueur testée d'une éprouvette est constante et est soumise à un moment de flexion pur (homogène) sur toute sa longueur. Le moment de flexion est constant en tout point de l'éprouvette. On parle de flexion pure si les efforts parasites tranchants et en torsion auxquels l'éprouvette est soumise induisent des moments et gradients de moments négligeables pour les mesures (et donc que le moment est homogène sur toute la longueur de l'éprouvette). Ceci permet une déformation uniforme de l'éprouvette, c'est-à-dire en arc de cercle dans le domaine élastique du matériau de l'éprouvette si le matériau est homogène. On peut notamment qualifier la déformation d'uniforme si les hypothèses suivantes sont respectées : moment pur et homogène, section constante, matériau homogène.

Quel que soit le comportement de l'éprouvette et son hétérogénéité de matériaux, la marge d'erreur est particulièrement faible dans la mesure du moment de flexion qui lui est appliqué, de l'ordre de 10⁻⁴ N.m pour un dispositif mis en oeuvre chez la demanderesse.

L'utilisation d'un joint de cardan permet en outre d'obtenir une structure particulièrement simple, peu coûteuse et ayant un nombre de composants réduit par rapport à l'existant.

En outre, cette structure présente l'avantage d'être utilisable avec une machine de traction classique.

Avantageusement, les moyens de conversion comportent un deuxième joint de cardan.

Ce deuxième joint de cardan peut lui-même comporter un roulement, par exemple à billes.

Ce roulement peut être commun aux moyens de maintien d'une première extrémité d'une éprouvette et aux moyens de conversion.

Alternativement ou cumulativement, le deuxième joint de cardan peut comporter d'autres organes formant liaison pivot à faibles frottements et qui sont communs aux moyens de maintien d'une première extrémité de l'éprouvette et aux moyens de conversion, tel que des liaisons à pointes métalliques sur saphir, ou encore des liaisons par aiguilles montées pivotantes dans des alésages respectifs.

Le deuxième joint de cardan forme une articulation à faibles frottements et permet de minimiser encore l'impact des efforts parasites.

Alternativement, le premier joint de cardan est relié aux moyens de maintien d'une première extrémité de l'éprouvette, les moyens de maintien d'une première extrémité de l'éprouvette comportant au moins un organe muni d'un perçage destiné à recevoir une extrémité d'une éprouvette. L'organe concerné se trouve derrière le premier joint de cardan dans la chaîne cinématique reliant le fil actionneur à l'éprouvette, en partant du fil actionneur. Il s'agit par exemple d'un bras fixé sur un arceau du premier joint de cardan.

Cette structure est particulièrement avantageuse en termes de coûts. Les jeux de liaison entre l'éprouvette et le pourtour du perçage remplacent avantageusement le second joint de cardan. Les frottements entre l'éprouvette et le pourtour du perçage sont tout à fait négligeables pour la mesure du moment de flexion.

Les moyens de transformation peuvent comporter une roue, le premier joint de cardan reliant la roue et les moyens de maintien d'une première extrémité de l'éprouvette.

Dans un exemple particulier de réalisation, le premier joint de cardan est relié à au moins une structure, comportant par exemple un bras, qui traverse les moyens de transformation. Cette structure peut comporter en outre des moyens d'équilibrage pour que le poids du dispositif ne pèse pas sur l'échantillon sollicité, par exemple porter une masse d'équilibrage. Cette structure peut encore comporter deux branches disposées en fourche, les moyens de transformation comportant une roue, la roue étant pourvue de deux ouvertures traversantes, chaque branche traversant l'une respective des deux ouvertures et pouvant être reliée au premier joint de cardan.

Le dispositif ci-dessus peut comporter en outre des moyens de mesure pour mesurer un effort exercé sur les moyens de traction ou des moyens de mesure pour mesurer un effort en torsion sur un organe aval auquel est relié le premier joint de cardan.

L'invention porte également sur un système de test mécanique en flexion, comportant une machine de traction et un dispositif de test mécanique en flexion tel que décrit ci-dessus, la machine de traction comportant un mécanisme de traction relié aux moyens de traction du dispositif de test, le mécanisme étant configuré pour appliquer une force de traction sur ces moyens de traction.

L'invention porte encore sur un procédé de test mécanique en flexion d'une éprouvette à l'aide d'un dispositif de test mécanique tel que décrit ci-dessus, comportant les étapes de :
- mise en place d'une première extrémité de l'éprouvette dans les moyens de maintien d'une première extrémité d'une éprouvette, et d'une deuxième extrémité de l'éprouvette dans les moyens de maintien d'une deuxième extrémité de l'éprouvette ;
- application d'une tension sur les moyens de traction ;
- détermination du moment de flexion par des moyens de mesure pour mesurer un effort exercé sur les moyens de traction ou par des moyens de mesure pour mesurer un effort en torsion sur un organe aval auquel est relié le premier joint de cardan.

Avantageusement, la mise en place de l'éprouvette comporte les étapes suivantes :
- serrage d'une première bague sur une première extrémité de l'éprouvette, contre les moyens de maintien de la première extrémité d'une éprouvette ;
- serrage d'une deuxième bague sur une deuxième extrémité de l'éprouvette, contre les moyens de maintien de la deuxième extrémité de l'éprouvette ;
   la première et la deuxième bague étant serrées sur les extrémités respectives de l'éprouvette à l'extérieur de la zone comprise entre les moyens de maintien de la première et de la deuxième extrémité de l'éprouvette.

Un dispositif ou un procédé selon l'invention s'applique avantageusement à un échantillon élancé, dont le ratio longueur/diamètre est supérieur ou égal à 5, par exemple compris entre 5 et 20.

Un dispositif ou un procédé selon l'invention permet d'obtenir une grande déformation, de l'éprouvette, d'au moins quelques %, par exemple d'au moins 3 % ou d'au moins 5 %, ceci étant fonction de la nature du matériau. Par exemple, une déformation de 5 % d'une éprouvette en acier est grande, une déformation comprise entre 10 % et 15 % pour du NiTi est également grande.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures annexées, schématiques et partielles, dans lesquelles :
- la figure la est une vue de côté d'une partie d'un dispositif de test selon l'invention ;
- la figure 1b est une vue de face du dispositif de la figure la montrant une éprouvette dans un état fléchi particulier, au cours d'un test ;
- la figure 2a est une vue de côté d'une variante du dispositif de la figure la ;
- la figure 2b est une vue de face partielle du dispositif de la figure 2a montrant une éprouvette au repos, ici rectiligne, logée dans le dispositif;
- la figure 2c est une vue de face du dispositif de la figure 2a montrant une éprouvette en flexion ;
- les figures 3a et 3b sont des vues de côté et de face d'une autre variante du dispositif de la figure 1, la figure 3b montrant une éprouvette au repos, ici rectiligne, logée dans le dispositif;
- la figure 4 est un relevé de mesures effectué au cours d'un test en flexion pour deux fils d'acier de diamètre différent ;
- les figures 5a et 5b sont des photographies d'éprouvettes déformées en flexion dans le dispositif des figures 2a à 2c;
- la figure 6 est un schéma d'un joint de cardan mis en oeuvre dans la variante du dispositif illustrée en figures 3a et 3b ;
- la figure 7 est une vue de côté d'une autre variante du dispositif de la figure la ;
- la figure 8 est une représentation schématique et agrandie de la déformation locale d'une éprouvette déformée en flexion pure.

### EXPOSÉ DÉTAILLÉ DE MODES DE RÉALISATION PARTICULIERS

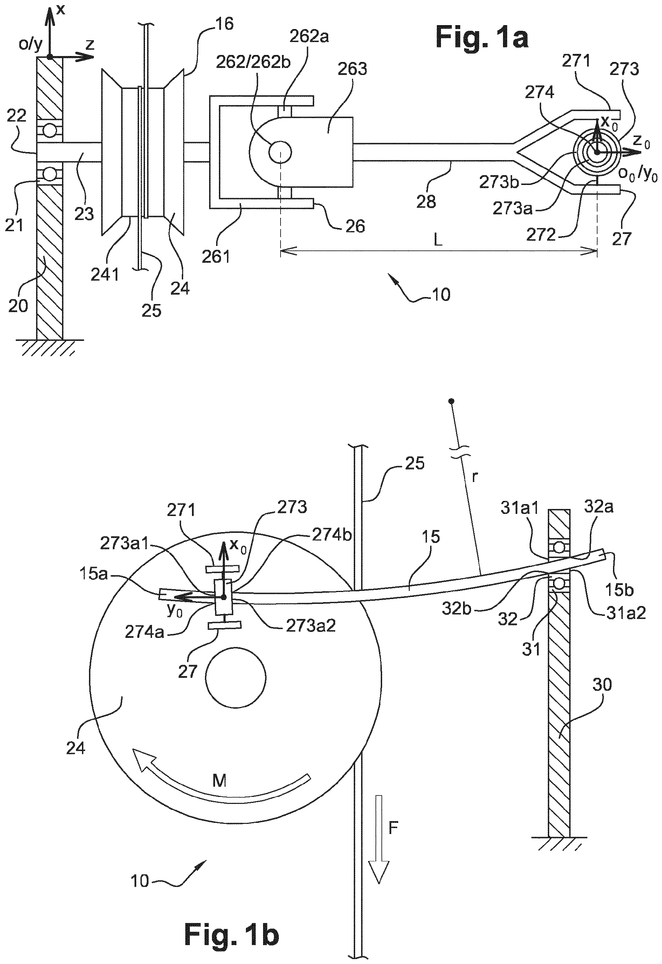

Un dispositif de test en flexion en quatre points 10 est illustré en figures 1a et 1b.

Le dispositif 10 comporte ici un bâti 20, une poulie 16 ou système de poulie, un fil actionneur 25, deux joints de cardan 26 et 27, un arbre 28 (ou bras) qui relie ici les deux joints de cardan 26 et 27, et un support 30 (figure 1b).

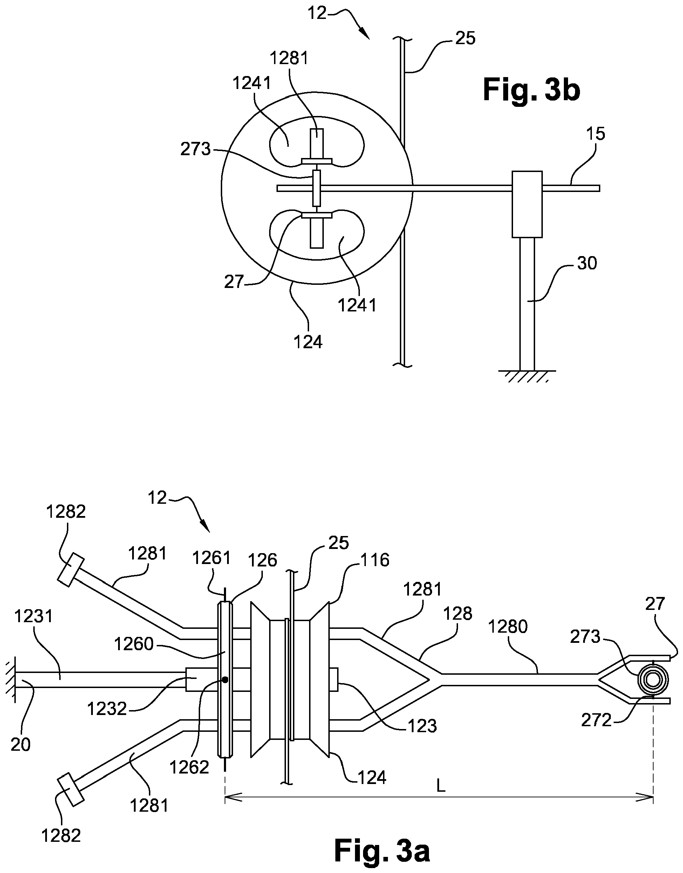

Une éprouvette 15, encore appelée échantillon, dont les propriétés en flexion sont à mesurer, est également illustrée au repos en figure 3b ou en flexion en figure 1b. L'éprouvette 15 peut être par exemple un fil ou un tube dont le diamètre est inférieur à 1 mm, par exemple métallique mais non exclusivement. L'éprouvette 15 peut être une éprouvette élancée, dont le ratio longueur/diamètre est, par exemple, supérieur ou égal à 5, préférentiellement mais non limitativement compris entre 5 et 20, par exemple égal à, ou de l'ordre de, 8, ou 10 ou 12.

Comme il sera vu plus loin en référence à la figure 1b, lorsque l'éprouvette 15 est en flexion, l'éprouvette 15 est en contact en quatre points avec le dispositif 10, à savoir les points 32a, 32b, 274a et 274b dans le mode de réalisation représenté en figure 1b.

Le bâti 20 comporte un palier 21, ici un roulement à billes, délimitant un orifice 22. De même, le support 30 comporte un palier 31, ici un roulement à billes, délimitant un orifice 32. Le bâti 20 et le support 30 peuvent être soit directement solidaires l'un de l'autre, c'est-à-dire fabriqué à parti d'un même bloc, soit fixés l'un à l'autre, soit encore fixés l'un et l'autre à un bâti fixe d'une machine d'essai externe telle qu'une machine de traction. Le bâti 20 et le support 30 servent par exemple de référentiels fixes au cours des essais de flexion.

La poulie 16 comporte ici un arbre 23 (ou bras) et une roue 24. La roue 24 est fixée sur l'arbre 23 et solidaire en rotation de celui-ci.

Le fil actionneur 25 est enroulé dans une gorge centrale 241 que comporte la roue 24. La gorge centrale 241 a préférentiellement un fond plat pour que le fil actionneur ne subisse pas de glissement dans la gorge 241, que le fil ne se chevauche pas lui-même, et que la distance entre le centre de rotation de la poulie et le fil reste constante quelle que soit la position angulaire. Un glissement ou un chevauchement du fil sur lui-même, comme un contact du fil actionneur avec lui-même, risqueraient d'occasionner des frottements et des erreurs de mesures. Le terme fil actionneur peut désigner un fil à proprement parler ou un câble dans le cas d'un dispositif de taille plus importante. L'arbre 23 est logé dans l'orifice 22 et fixé sur la piste interne du roulement 21. L'arbre 23 et la roue 24 sont donc mobiles en rotation par rapport au bâti 20.

Le fil actionneur 25 est par exemple fixé par une première extrémité à un mécanisme de traction d'une machine de traction externe non illustrée. Ce fil 25 est utilisé pour convertir un mouvement de translation, ici fourni par la machine de traction, en un mouvement de rotation de la roue 24 et de l'arbre 23.

L'autre extrémité du fil actionneur 25 peut être par exemple laissée libre, ou bien être fixée à une pièce mobile servant à la translation du fil 25 du mécanisme de traction.

Un premier repère tridimensionnel Oxyz est défini fixe par rapport au bâti 20 (figure la), l'axe z coïncidant avec l'orientation longitudinale de l'arbre 23 et les axes x et y étant transversaux l'un à l'autre et à l'axe z.

Un deuxième repère tridimensionnel Ooxoyozo est défini fixe par rapport à l'arbre 28 (figure la), l'axe zo coïncidant avec l'orientation longitudinale de l'arbre 23 et les axes x₀ et y₀ étant transversaux l'un à l'autre et à l'axe z₀.

L'axe z coïncide également avec l'axe zo du bras 28 lorsque celui-ci est dans la position illustrée en figure 1a, tandis que les axes x et y sont parallèles respectivement à x₀ et y₀.

Il faut comprendre que l'orientation des différents composants du dispositif 10 peut varier au cours d'un test en flexion et ne plus coïncider avec les axes du repère Oxyz.

Le premier joint de cardan 26 est ici du type à croisillon.

Le joint 26 représenté comporte deux arceaux 261 et 263 (c'est-à-dire deux pièces en forme de U) et un croisillon 262. Le croisillon 262 comporte deux branches 262a et 262b transversales l'une à l'autre et jointes en leur milieu. Dans la position de l'arbre 28 illustrée en figure 1a, la branche 262a est orientée selon l'axe x et la branche 262b est orientée selon l'axe y . Le croisillon 262 est monté en liaison pivot avec les arceaux 261 et 263 respectivement par ses branches 262a et 262b.

Ainsi, dans le repère Oxyz, l'arbre 23 est mobile en rotation autour de l'axe z. Le joint de cardan 26 permet la transmission d'un couple en torsion entre l'un et l'autre des arbres 23 et 28, y compris lorsque ceux-ci sont inclinés ou disposés à un angle l'un par rapport à l'autre, et des efforts selon les axes x, y et z. Un mouvement de rotation de l'arbre 28 autour de son axe sera transmis à l'arbre 23, c'est-à-dire qu'un couple appliqué à l'arbre 28 sera transmis à l'arbre 23. Inversement, un mouvement de rotation de l'arbre 23 sera transmis à l'arbre 28. Les trois efforts transmis selon les axes x, y et z sont annulés par les positions prises par les autres liaisons du système, à savoir ici le joint de cardan 27 et la liaison pivot 32.

Alternativement et non limitativement, le joint de cardan à croisillon 26 peut être remplacé par un joint de cardan d'un autre type tel que le joint de cardan à roulement 27 ou le joint de cardan à anneau 126 décrits ci-après ou des joints de cardan comportant d'autres types de liaisons pivot à faibles frottements comme des liaisons à pointes métalliques sur, ou dans, des saphirs (en anglais 'jewel bearing').

Le deuxième joint de cardan 27 comporte ici un arceau 271, deux axes de pivot 272 et un roulement à billes 273 ayant une piste interne 273a et une piste externe 273b. Les axes de pivot 272, fichés de part et d'autre dans la piste externe du roulement 273, la relient en liaison pivot à l'arceau 271. Les axes de pivot 272 sont orientés ici selon l'axe x dans la position illustrée en figure la.

La piste interne 273a du roulement à billes 273 délimite un orifice de réception 274 dimensionné pour accueillir l'extrémité d'une éprouvette 15 dont on souhaite tester les propriétés en flexion. L'arceau 261 est par exemple fixé à l'arbre 23 ou fabriqué d'une pièce avec l'arbre 23. L'arceau 263 du joint de cardan 26 et l'arceau 271 du joint de cardan 27 sont par exemple fixés au bras 28 qui les relie ou encore fabriqués l'un, l'autre ou les deux, d'une pièce avec le bras 28.

Dans le repère Oxyz, la piste externe 273b est mobile en rotation autour d'un axe confondu avec l'axe x dans la position illustrée en figure la. La piste intérieure 273a offre un degré de liberté supplémentaire en rotation selon son axe longitudinal propre, ici transversal à l'axe x. Lorsqu'une éprouvette 15 est logée dans l'orifice de réception 274, le joint de cardan 27 permet la transformation du couple en torsion auquel l'arbre 28 est soumis par traction sur le fil actionneur 25, en un moment de flexion sur l'éprouvette 15 par l'intermédiaire de deux points d'appuis, tels que les points 274a et 274b décrits ci-après, l'arbre 28 et l'éprouvette 15 étant inclinés ou disposés à un angle l'un par rapport à l'autre. Un mouvement de rotation de l'arbre 28 autour de l'axe de l'éprouvette 15, et un couple appliqué à l'arbre 28 autour de cet axe, sera transmis à l'éprouvette 15. Inversement, un mouvement de rotation de l'éprouvette 15 sera transmis à l'arbre 28.

Pour tester les propriétés en flexion de l'éprouvette 15, cette éprouvette 15 est mise en place dans les points d'attache formés par l'orifice 32 et par l'orifice 274, ici par insertion de ses extrémités dans les points d'attache (voir figure 1b).

Au repos, l'éprouvette 15 pouvant tourner dans le roulement 31 par rapport au bâti 30, les efforts tranchants suivant l'axe zo potentiellement transmis par le bras 28 résultent en une rotation du plan de flexion de l'éprouvette. Cette rotation du plan de flexion de l'éprouvette s'effectue jusqu'à ce que la position du système et de l'éprouvette 15 permette à cet effort tranchant suivant zo de s'annuler. Lorsque l'éprouvette est rectiligne, les efforts tranchants sont supposés être nuls lors du montage de l'éprouvette 15 grâce au réglage fin de la position du bâti 30 et aux jeux fonctionnels entre l'éprouvette 15 et les roulements 31 et 273. Le rayon de courbure initial de l'éprouvette 15 y est sans importance comme il sera expliqué plus loin en référence au tracé 301.

Une tension, par exemple verticale, est appliquée sur le fil actionneur 25. Le mouvement de rotation de la roue 24 induite par le mouvement de translation du fil actionneur 25 est transmis via les joints de cardan 26 et 27 à l'éprouvette 15. L'éprouvette 15 se déplace alors jusqu'à venir en contact en quatre points avec le dispositif 10 : d'une part les points 274a et 274b situés respectivement sur une première arête annulaire 273a1 et sur une deuxième arête annulaire 273a2 de la piste 273a, diagonalement opposés de part et d'autre de l'orifice 273 ; d'autre part les points 32a et 32b situés respectivement sur une première arête annulaire 31a1 et sur une deuxième arête annulaire 31a2 de la piste interne 31a du roulement 31, diagonalement opposés de part et d'autre de l'orifice 32 (voir points 32a, 32b, 274a, 274b en figure 1b). Ces points de contact subsistent et transmettent des efforts à l'éprouvette résultant en une flexion « quatre points ».

Les efforts tranchants ou de torsion parasites sur l'éprouvette sont rendus négligeables par les différents organes du dispositif de test 10. Les efforts tranchants parasites doivent être compris comme induisant des moments différents du moment en flexion pure, par exemple les moments en torsion ou les efforts en cisaillement.

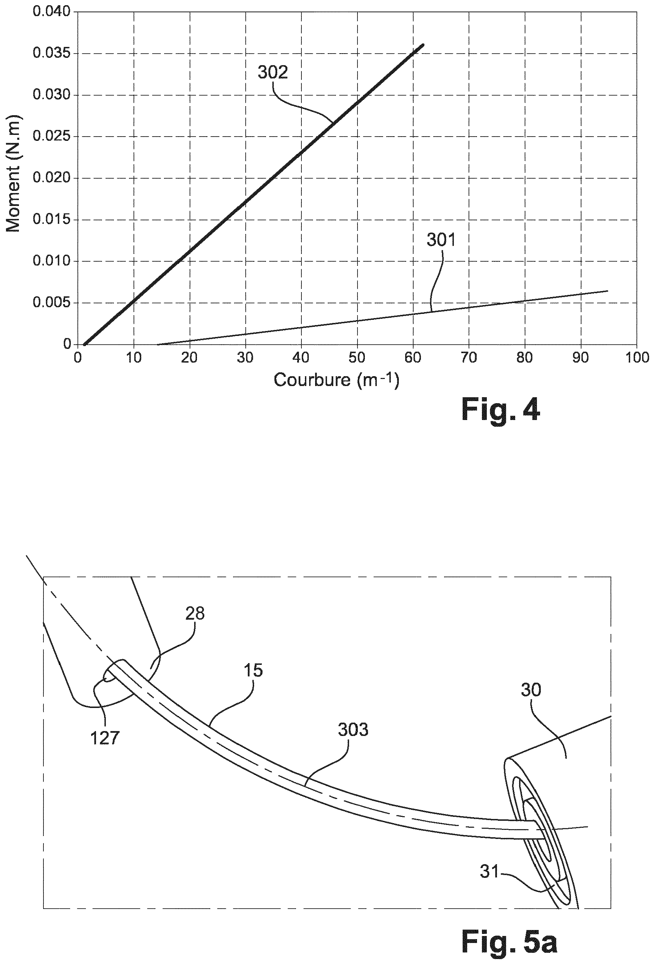

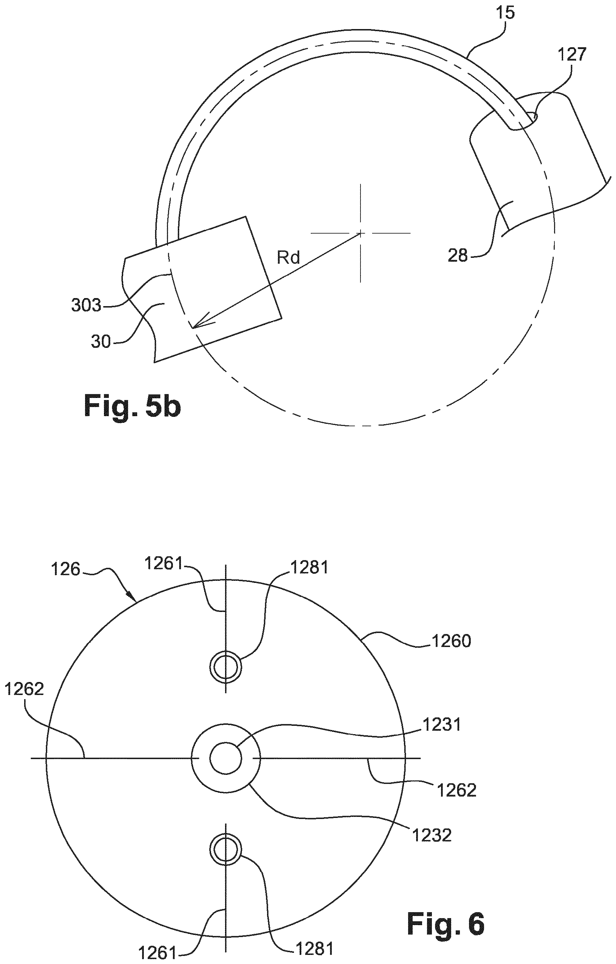

Dans le dispositif 10, les efforts parasites apparaissant dans l'éprouvette 15 au cours d'un test de flexion résultent en une mise en rotation du roulement 31, du joint de cardan 27 -dont le roulement 273- et du joint de cardan 26 (figure 1b). En d'autres termes, les joints de cardan 26 et 27 permettent de rendre négligeables dans l'éprouvette 15 à la fois les efforts parasites en cisaillement transversalement au bras 28, c'est-à-dire selon les axes x₀ et z₀ transversaux au bras 28, tel qu'illustré en figure 1a, et les moments en torsion. Les roulements 273 et 31 permettent de minimiser et de rendre négligeables dans l'éprouvette 15 les efforts selon l'axe zo longitudinal du bras 28 et les moments parasites en torsion. Pour une raison de lisibilité, seuls la roue 24, le fil 25, le joint de cardan 27 et le support 30 sont illustrés en vue de face en figure 1b. Grâce aux degrés de liberté permis par les joints de cardan 26 et 27 et le roulement 31, l'éprouvette 15 est soumise à un moment de flexion dit pur. Le moment de flexion est constant en tout point de l'éprouvette. L'éprouvette 15, dans le cas d'un matériau homogène, est donc déformée selon un arc de cercle parfait entre les points d'attache formés par les roulements 273 et 31 (voir lignes médianes 303 des éprouvettes 15 représentées en figures 5a et 5b en référence à la variante 11 détaillée ci-dessous).

Ce moment de flexion appliqué à l'éprouvette 15 est alors connu en mesurant l'effort de tension du fil actionneur 25, par exemple à l'aide d'une cellule de mesure que comporte la machine de traction. Une solution alternative pour connaître le moment de flexion est d'utiliser directement un appareil de mesure de la déformation en torsion du bras 28.

Dans les faits, de faibles frottements, négligeables, apparaissent dans les joints de cardan 26 et 27. Une longueur L importante entre les joints de cardan 26 et 27, ici entre la branche du croisillon 262 et l'axe 272 sur lesquels le bras 28 est monté, permet de minimiser encore l'impact du frottement dans les joints de cardan 26 et 27 sur les mesures.

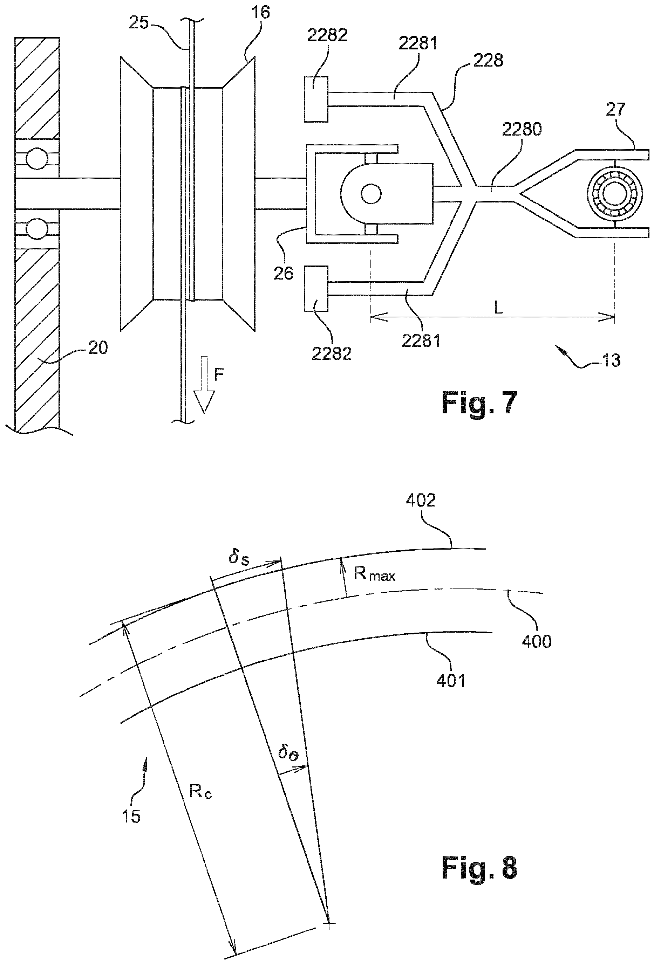

La déformation maximale εₘₐₓ en surface de l'éprouvette répond à l'équation suivante : εₘₐₓ = Rₘₐₓ ^{∗} (∂θ/∂s) = Rₘₐₓ ^{∗} [(1/R_{c}) - (1/R₀)], dans laquelle la déformation εₘₐₓ peut être par exemple exprimée en pourcentage, et Rₘₐₓ est le rayon de l'éprouvette, ∂θ/∂s ou (1/R_{c}) - (1/R₀) sont la variation de rayon de courbure entre l'état non déformé et l'état déformé, ∂θ est la variation locale d'angle entre deux sections de l'éprouvette espacées d'une distance ∂s, Rc est le rayon de courbure atteint lors de la déformation maximale, Ro est le rayon de courbure initial (voir figure 8 sur laquelle 400 est la ligne médiane d'une éprouvette 15 dans le plan de flexion, 401 est la ligne intérieure, déformée en compression, et 402 est la ligne extérieure, déformée en traction).

Dans la présente demande, le terme 'hautes déformations' correspond à une valeur εₘₐₓ supérieure à quelques %, par exemple 5%, ou encore 10% pour un rayon d'éprouvette Rₘₐₓ de 0,25mm.

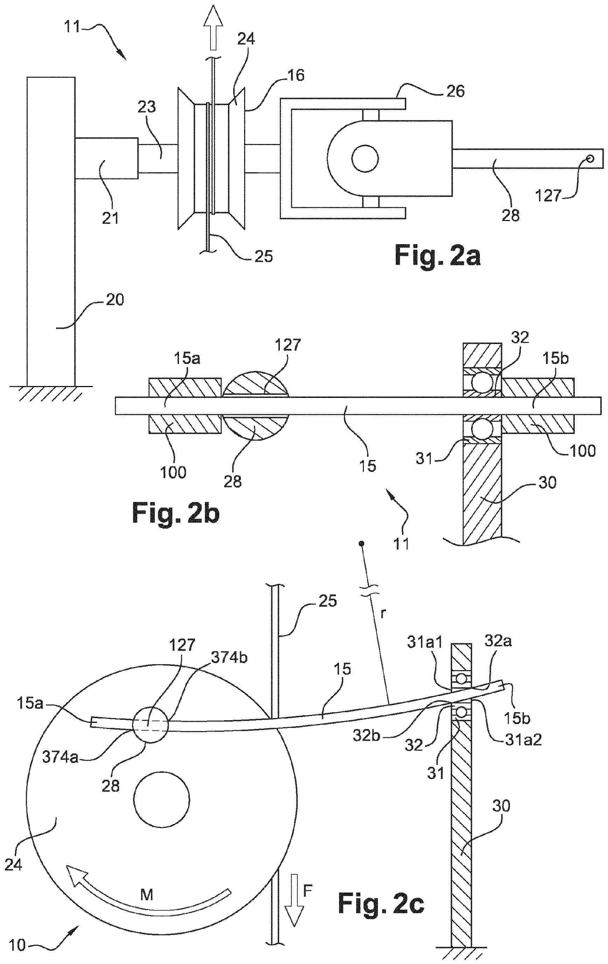

Une variante 11 du dispositif 10 est illustrée en figure 2a. Les éléments 20 à 26 sont généralement les mêmes que dans le dispositif illustré en figure la. Le joint de cardan 27 est ici remplacé par un simple perçage 127 ménagé dans le bras 28. Le perçage 127 forme alors un orifice de réception d'éprouvette ou point d'attache. Le perçage 127 doit être choisi de diamètre supérieur au diamètre de l'éprouvette 15. Les jeux fonctionnels ainsi présents entre l'éprouvette 15 et la surface interne du perçage 127 offrent les mêmes degrés de liberté que le roulement 273 et le joint de cardan 27. Les frottements transversaux à l'éprouvette 15 sont légèrement supérieurs mais néanmoins toujours négligeables dans la mesure du moment de flexion auquel l'éprouvette 15 est soumise et permettent toujours de parler d'un moment de flexion pur.

Comme dans le dispositif 10, lorsque l'éprouvette 15 est sollicitée en flexion dans le dispositif 11, elle est en contact en quatre points avec le dispositif 11 : les points 374a et 374b sur les arêtes du perçage 127 et les points 32a et 32b sur le roulement 31 (voir figure 2c).

La section centrale de l'éprouvette 15, c'est-à-dire comprise entre les points 374b et 32b se faisant face entre le bras 28 et le support 30, est soumise à un moment homogène. Ceci est prouvé expérimentalement, par exemple au moyen de prises de vues, telles que celles reproduites schématiquement en figures 5a et 5b. Un traitement digital de telles prises de vue permet en effet de démontrer la géométrie circulaire atteinte lors de la flexion d'une éprouvette 15. Une telle géométrie est la preuve à la fois d'une déformation en flexion pure et de l'homogénéité du matériau. Dans l'exemple particulier de la figure 5b, le rayon de courbure Rd atteint est égal à 4,3 mm. Un rayon de courbure encore inférieur peut être atteint, la limite inférieure étant atteinte lorsque le bras 28 est au contact du support 30.

Dans les sections comprises entre les points 32a et 32b d'une part et 374a et 374b d'autre part, le moment de flexion varie théoriquement de manière linéaire. Le moment de flexion n'y est donc pas homogène. La déformation de l'éprouvette 15 entre les points 374a et 374b (respectivement 32a et 32b) résulte en un contact à angle différent entre l'éprouvette 15 et la surface de contact en chacun des points 374a et 374b. Cette différence d'angle peut donc induire des efforts suivant l'axe de l'éprouvette entre les points 374a et 374b.

Avantageusement, des bagues 100 peuvent donc être prévues, serrées sur les extrémités de l'éprouvette 15, contre le bras 28 et le bâti 30, à l'extérieur de la zone comprise entre le bras 28 et le bâti 30 (figure 2b). Les bagues 100 ont pour rôle d'empêcher le glissement longitudinal de l'éprouvette 15 en ajoutant une force longitudinale contre le pourtour du perçage 127 permettant d'équilibrer les efforts normaux en 374a et 374b (respectivement 32a et 32b) respectivement. Les bagues 100 permettent donc de conserver une longueur d'éprouvette 15 constante entre les roulements 21 et 31 au cours du test en flexion..

Une autre variante 12 du dispositif 10 est illustrée en figures 3a et 3b. Les éléments similaires aux modes de réalisation décrits précédemment portent les mêmes références sur les figures et ne sont pas redécrits.

Dans cette variante 12, le système de poulie 116, le joint de cardan 126 et les structures 123 et 128 sont substitués au système 16, au joint de cardan 26, à l'arbre arbre 23 et au bras 28 du dispositif 10.

La structure 123 comporte un arbre 1231 et un fourreau 1232. L'arbre 1231 est fixé sur le bâti 20. Le fourreau 1232 est monté en liaison pivot sur l'arbre 1231, par l'intermédiaire d'un palier, par exemple un roulement à billes, non représenté.

Le système de poulie 116 comporte une roue 124. Deux ouvertures 1241 traversent la roue 124 longitudinalement, entre ses deux faces latérales.

La roue 124 est fixée sur le fourreau 1232.

La structure 128 comporte un bras 1280, deux branches 1281, une masse d'équilibrage 1282, ici sous forme de deux masselottes. Le bras 1280 est relié en une extrémité au joint de cardan 27.

A l'extrémité du bras 1280 opposée au joint 27, les deux branches 1281 s'étendent en fourche, symétriquement, c'est-à-dire en image miroir, par rapport au plan yz. Chaque branche 1281 a ici depuis le bras 1280 une portion en biais, une portion parallèle au bras 1280 et enfin une autre portion en biais, ici de manière non limitative parallèle à la première portion en biais. Chaque branche 1281 traverse une ouverture 1241 respective de la roue 124. Grâce au joint de cardan 126 décrit ci-après, les branches 1281 sont mobiles en rotation autour de deux axes transversaux à l'axe longitudinal du fourreau 1232, et transversaux l'un à l'autre.

Chaque branche 1281 porte ici une masselotte d'équilibrage 1282 en son extrémité distale, opposée au bras 1280. Les masselottes 1282 contrebalancent le poids du bras 1280 de sorte qu'en l'absence de l'éprouvette 15, le bras 1280 soit à l'équilibre, soit sensiblement à l'horizontale. Autrement dit, les masselottes 1282 permettent de rendre négligeable l'influence du poids propre du bras 1280 et du joint de cardan 27.

Les masses d'équilibrage 1282 peuvent être remplacées par d'autres masses d'équilibrage telles qu'un élément annulaire reliant les branches 1281.

Le joint de cardan 126 comporte ici un anneau 1260, deux axes de pivot 1261 et deux axes de pivot 1262 (voir figure 6). Les axes de pivot 1261 et 1262 ont par exemple mais non limitativement une forme d'aiguille. Les axes 1262 relient en liaison pivot l'anneau 1260 au fourreau 1232. Les axes 1261 relient en liaison pivot l'anneau 1260 à chacune des branches 1281 du côté de la poulie 16 opposé au joint de cardan 27. Ceci permet avantageusement d'augmenter la longueur L entre les joints de cardan 126 et 27, c'est-à-dire ici entre les axes 1261 et l'axe 272, en conservant un encombrement du dispositif 12 semblable à celui du dispositif 10. Les dimensions des figures ne sont pas limitatives. Il est possible par exemple de choisir un bras 28 ou 1280 de longueur plus importante.

Une autre variante 13 du dispositif 10 est illustrée en figure 7.

Dans cette variante, le bâti 20, la poulie 16, les joints de cardan 26 et 27 sont les mêmes que décrits précédemment.

Le dispositif 13 comporte une structure 228 proche de la structure 128 décrite plus haut. La structure 228 comporte un bras 2280 qui relie les joints de cardan 26 et 27, deux branches 2281 qui s'étendent en fourche de part et d'autre du bras 2280, une masse d'équilibrage 2282, ici sous forme de deux masselottes portées respectivement par chaque branche 2281 en son extrémité distale, opposée au bras 2280. Les branches 2281 ne traversent pas ici la roue de la poulie 16. Les masselottes 2282 ont le même rôle d'équilibrage du bras 2280 par rapport au joint de cardan 26 que les masselottes 1282 par rapport au joint de cardan 126.

D'autres modes de réalisation sont encore possibles, par exemple en combinant en un même dispositif de test en flexion le joint de cardan 126 et le perçage simple 127.

Dans tous les modes de réalisation décrits, des bagues 100 peuvent être mises en oeuvre avec les mêmes avantages que décrits précédemment.

Les dispositifs ci-dessus ont été testés et validés expérimentalement. Deux tracés 301 et 302 illustrés en figure 4 ont été obtenus au cours d'un test en flexion dans le domaine élastique (donc linéaire) de deux éprouvettes, ici des fils d'acier. Le premier tracé 301 a été obtenu en testant un fil d'acier élancé de diamètre 0,3 mm, un second tracé 302 a été obtenu en testant un fil d'acier élancé de diamètre 0,5 mm.

La courbure, ou plus précisément la variation de courbure par rapport à la courbure originale, se lit sur l'axe des abscisses, tandis que le moment de flexion correspondant se lit sur l'axe des ordonnées.

Les différents points de ces tracés 301 et 302 ont été obtenus d'une part par mesure du moment de flexion appliqué au fil concerné tel qu'expliqué plus haut, et d'autre part par mesure du rayon de courbure sur des photographies ou prises de vues réalisées à des instants correspondants.

Il est visible que le tracé 301 est décalé par rapport à l'origine du graphique et possède comme point de départ une courbure d'environ 15 m⁻¹. En effet, l'échantillon est stocké sous forme de bobine et possède un rayon de courbure initial non nul. En pratique, ce rayon de courbure initial n'a comme impact que de décaler la courbe. Le tracé 301 pourrait être aisément corrigé en déduisant, de toutes les valeurs relevées (1/Rc), la valeur 1/Ro, où Ro est le rayon de courbure initial de l'éprouvette 15. L'éprouvette 15, lorsqu'elle comporte initialement une courbure non nulle, une fois montée dans le système, tendra naturellement à trouver une position permettant de minimiser à la fois son énergie potentielle élastique et l'énergie potentielle élastique de tout le système grâce aux degrés de liberté qu'offrent par exemple les roulements 273 et 31. L'éprouvette 15 se déformera alors à partir de cette position d'énergie potentielle élastique la plus faible.

Pour obtenir le tracé 301, le dispositif de test 10 a été utilisé jusqu'à une courbure de l'ordre de 95 m⁻¹, soit un rayon de courbure de 1/95 m, c'est-à-dire d'environ 1,05 cm.

Des essais expérimentaux ont validé l'utilisation du dispositif 10 jusqu'à un rayon de courbure de 7 mm pour d'autres matériaux ayant de meilleures propriétés en flexion que l'acier.

Selon la forme et la dimension des éléments des dispositifs 10, 11, 12 ou de leurs variantes, des rayons de courbure encore inférieurs peuvent être obtenus jusqu'à ce que les moyens de maintien des deux extrémités de l'éprouvette 15, tels que le roulement 273, l'arbre 28 pourvu du perçage 127 ou le roulement 31, se touchent.

## Revendications

1. Dispositif de test mécanique en flexion en quatre points d'une éprouvette, ce dispositif comportant :
a) des moyens de maintien d'une première extrémité de l'éprouvette (27; 127 ; 28 ; 128) et des moyens de maintien d'une deuxième extrémité de l'éprouvette (30, 31),
b) des moyens de traction (25) et des moyens de transformation (16, 116) pour transformer un mouvement de translation desdits moyens de traction (25) en un mouvement de rotation,
c) des moyens de conversion (26; 27 ; 126 ; 127) pour convertir ledit mouvement de rotation en une déformation en flexion de l'éprouvette, lesdits moyens de conversion comportant au moins un premier joint de cardan (26 ; 126) reliant lesdits moyens de transformation auxdits moyens de maintien de la première extrémité de l'éprouvette (27 ; 127 ; 28 ; 128).

2. Dispositif selon la revendication 1, dans lequel les moyens de conversion (26 ; 27 ; 126 ; 127) pour convertir ledit mouvement de rotation en une déformation en flexion de l'éprouvette comportent un deuxième joint de cardan (27).

3. Dispositif selon la revendication précédente, le deuxième joint de cardan (27) comportant un roulement (273).

4. Dispositif selon la revendication précédente, le roulement (273) faisant en outre partie des moyens de maintien d'une première extrémité de l'éprouvette (27 ; 28 ; 128).

5. Dispositif selon la revendication 1, le premier joint de cardan (26 ; 126) étant relié aux moyens de maintien d'une première extrémité de l'éprouvette (27; 127 ; 28 ; 128), les moyens de maintien d'une première extrémité de l'éprouvette (27; 127 ; 28 ; 128) comportant au moins un organe (28 ; 128) muni d'un perçage (127) destiné à recevoir une extrémité d'une éprouvette.

6. Dispositif selon l'une des revendications précédentes, les moyens de transformation (16) pour transformer un mouvement de translation desdits moyens de traction (25) en un mouvement de rotation comportant une roue (24), le premier joint de cardan (26) reliant la roue (24) et les moyens de maintien d'une première extrémité de l'éprouvette (27 ; 127 ; 28).

7. Dispositif selon l'une des revendications précédentes, le premier joint de cardan (126) étant relié à au moins une structure (128) qui traverse les moyens de transformation (116) pour transformer un mouvement de translation desdits moyens de traction (25) en un mouvement de rotation.

8. Dispositif selon la revendication précédente, la structure (128) comportant deux branches (1281) disposées en fourche, les moyens de transformation (116) pour transformer un mouvement de translation desdits moyens de traction (25) en un mouvement de rotation comportant une roue (124), la roue (124) étant pourvue de deux ouvertures traversantes (1241), chaque branche (1281) traversant l'une respective des deux ouvertures (1241).

9. Dispositif selon l'une des revendications 7 et 8, la structure (128) comportant en outre des moyens d'équilibrage (1282), par exemple au moins une masse d'équilibrage.

10. Dispositif selon l'une des revendications précédentes, comportant en outre des moyens pour mesurer un effort exercé sur les moyens de traction (25) ou des moyens pour mesurer un effort en torsion sur un organe aval (28; 128) auquel est relié le premier joint de cardan (26 ; 126).

11. Système de test mécanique en flexion, comportant une machine de traction et un dispositif de test mécanique en flexion en quatres points (10; 11; 12) selon l'une des revendications 1 à 10, la machine de traction comportant un mécanisme de traction relié aux moyens de traction (25) du dispositif de test, le mécanisme étant configuré pour appliquer une force de traction sur ces moyens de traction.

12. Procédé de test mécanique en flexion en quatre points d'une éprouvette à l'aide d'un dispositif de test mécanique en flexion selon l'une des revendications 1 à 10, comportant les étapes de :
- mise en place de l'éprouvette dans les moyens de maintien d'une première extrémité d'une éprouvette (27, 273 ; 127) et dans les moyens de maintien d'une deuxième extrémité de l'éprouvette (30, 31),
- application d'une tension sur les moyens de traction,
- détermination du moment de flexion par des moyens pour mesurer un effort exercé sur les moyens de traction (25) ou par des moyens pour mesurer un effort en torsion sur un organe aval (28 ; 128) auquel est relié le premier joint de cardan (26 ; 126).

13. Procédé selon la revendication précédente, la mise en place de l'éprouvette comportant les étapes de :
- serrage d'une première bague (100) sur une première extrémité de l'éprouvette, contre les moyens de maintien de la première extrémité d'une éprouvette (27, 273 ; 127),
- serrage d'une deuxième bague (100) sur une deuxième extrémité de l'éprouvette, contre les moyens de maintien de la deuxième extrémité de l'éprouvette (30, 31),
la première et la deuxième bague (100) étant serrées sur les extrémités respectives de l'éprouvette à l'extérieur de la zone comprise entre les moyens de maintien de la première et de la deuxième extrémité de l'éprouvette.

14. Procédé selon l'une des revendications 12 ou 13, dans lequel l'éprouvette est élancée.

15. Procédé selon l'une des revendications 13 ou 14, dans lequel l'éprouvette atteint une déformation en surface d'au moins 3 % ou d'au moins 5 %.

## Patentansprüche

1. Mechanische Prüfvorrichtung für eine Biegung an vier Punkten eines Probestücks, wobei diese Vorrichtung Folgendes beinhaltet:
a) Mittel zum Festhalten eines ersten Endes des Prüfstücks (27; 127; 28; 128) und Mittel zum Festhalten eines eweiten Endes des Prüfstücks (30, 31),
b) Mittel zum Ziehen (25) und Mittel zum Umwandeln (16, 116) zum Umwandeln einer Translationsbewegung der Mittel zum Ziehen (25) in eine Rotationsbewegung,
c) Mittel zum Konvertieren (26; 27; 126; 127) zum Konvertieren der Rotationsbewegung in eine Biegeverformung des Prüfstücks, wobei die Mittel zum Konvertieren mindestens ein erstes Kreuzgelenk (26; 126) beinhalten, das die Mittel zum Umwandeln mit den Mitteln zum Festhalten des ersten Endes des Prüfstücks (27; 127; 28; 128) verbindet.

2. Vorrichtung nach Anspruch 1, wobei die Mittel zum Konvertieren (26; 27; 126; 127) zum Konvertieren der Rotationsbewegung in eine Biegeverformung des Prüfstücks ein zweites Kreuzgelenk (27) beinhalten.

3. Vorrichtung nach dem vorstehenden Anspruch, wobei das zweite Kreuzgelenk (27) ein Lager (273) beinhaltet.

4. Vorrichtung nach dem vorstehenden Anspruch, wobei das Lager (273) weiter Teil der Mittel zum Festhalten eines ersten Endes des Prüfstücks (27; 28; 128) ist.

5. Vorrichtung nach Anspruch 1, wobei das erste Kreuzgelenk (26; 126) mit den Mitteln zum Festhalten eines ersten Endes des Prüfstücks (27; 127; 28; 128) verbunden ist, wobei die Mittel zum Festhalten eines ersten Endes des Prüfstücks (27; 127; 28; 128) mindestens ein Organ (28; 128) beinhalten, das mit einer Bohrung (127) versehen ist, die dazu bestimmt ist, ein Ende eines Prüfstücks aufzunehmen.

6. Vorrichtung nach einem der vorstehenden Ansprüche, wobei die Mittel zum Umwandeln (16) zum Umwandeln einer Translationsbewegung der Mittel zum Ziehen (25) in eine Rotationsbewegung ein Rad (24) beinhalten, wobei das erste Kreuzgelenk (26) das Rad (24) und die Mittel zum Festhalten eines ersten Endes des Prüfstücks (27; 127; 28) verbindet.

7. Vorrichtung nach einem der vorstehenden Ansprüche, wobei das erste Kreuzgelenk (126) mit mindestens einer Struktur (128) verbunden ist, die die Mittel zum Umwandeln (116) zum Umwandeln einer Translationsbewegung der Mittel zum Ziehen (25) in eine Rotationsbewegung durchquert.

8. Vorrichtung nach dem vorstehenden Anspruch, wobei die Struktur (128) zwei Äste (1281) beinhaltet, die als Gabel angeordnet sind, wobei die Mittel zum Umwandeln (116) zum Umwandeln einer Translationsbewegung der Mittel zum Ziehen (25) in eine Rotationsbewegung ein Rad (124) beinhalten, wobei das Rad (124) mit zwei durchquerenden Öffnungen (1241) versehen ist, wobei jeder Ast (1281) ein jeweiliges der beiden Öffnungen (1241) durchquert.

9. Vorrichtung nach einem der Ansprüche 7 und 8, wobei die Struktur (128) weiter Ausgleichsmittel (1282), beispielsweise mindestens ein Ausgleichsgewicht beinhaltet.

10. Vorrichtung nach einem der vorstehenden Ansprüche, weiter Mittel zum Messen einer Kraft, die auf die Mittel zum Ziehen (25) angewendet wird, oder Mittel zum Messen einer Torsionskraft auf ein stromabwärtiges Organ (28; 128), mit dem das erste Kreuzgelenk (26; 126) verbunden ist, beinhaltend.

11. Mechanisches Biegeprüfsystem, eine Traktionsmaschine und eine mechanische Prüfvorrichtung für eine Biegung an vier Punkten (10; 11; 12) nach einem der Ansprüche 1 bis 10 beinhaltend, wobei die Traktionsmaschine einen Zugmechanismus beinhaltet, der mit den Mitteln zum Ziehen (25) der Prüfvorrichtung verbunden ist, wobei der Mechanimus konfiguriert ist, um eine Zugkraft an den Mitteln zum Ziehen anzulegen.

12. Mechanisches Biegeprüfverfahren an vier Punkten eines Prüfstücks mithilfe einer mechanischen Prüfvorrichtung für eine Biegung nach einem der Ansprüche 1 bis 10, die folgenden Schritte beinhaltend:
- Einsetzen des Prüfstücks in die Mittel zum Festhalten eines ersten Endes eines Prüfstücks (27, 273; 127) und in die Mittel zum Festhalten eines zweiten Endes des Prüfstücks (30, 31),
- Anlegen einer Spannung an den Mitteln zum Ziehen,
- Bestimmen des Biegemoments durch die Mittel zum Messen einer Kraft, die auf die Mittel zum Ziehen (25) ausgeübt wird, oder Mittel zum Messen einer Torsionskraft auf ein stromabwärtiges Organ (28; 128), mit dem das erste Kreuzgelenk (26; 126) verbunden ist.

13. Verfahren nach dem vorstehenden Anspruch, wobei das Einsetzen des Prüfstücks die folgenden Schritte beinhaltet:
- Spannen eines ersten Ringes (100) an einem ersten Ende des Prüfstücks gegen die Mittel zum Festhalten des ersten Endes eines Prüfstücks (27, 273; 127),
- Spannen eines zweiten Ringes (100) an einem zweiten Ende des Prüfstücks gegen die Mittel zum Festhalten des zweiten Endes des Prüfstücks (30, 31),
wobei der erste und der zweite Ring (100) an den jeweiligen Enden des Prüfstücks außerhalb der Zone gespannt werden, die zwischen den Mitteln zum Festhalten des ersten und des zweiten Endes des Prüfstücks enthalten ist.

14. Verfahren nach einem der Ansprüche 12 oder 13, wobei das Prüfstück gestreckt ist.

15. Verfahren nach einem der Ansprüche 13 oder 14, wobei das Prüfstück eine Oberflächenverformung von mindestens 3 % oder mindestens 5 % erreicht.

## Claims

1. Device for performing a mechanical four-point bending test on a test piece, with this device comprising:
a) means for holding a first end of the test piece (27; 127; 28; 128) and means for holding a second end of the test piece (30, 31),
b) pulling means (25) and converting means (16, 116) for converting a translational movement of said pulling means (25) into a rotational movement,
c) conversion means (26; 27; 126; 127) for converting said rotational movement into bending deformation of the test piece, said conversion means comprising at least one first Cardan joint (26; 126) connecting said converting means to said means for holding the first end of the test piece (27; 127; 28; 128) .

2. Device according to claim 1, wherein the converting means (26; 27; 126; 127) for converting said rotational movement into bending deformation of the test piece comprise a second cardan joint (27).

3. Device according to the preceding claim, the second Cardan joint (27) comprising a bearing (273).

4. Device according to the preceding claim, the bearing (273) furthermore being part of the means for holding a first end of the test piece (27; 28; 128).

5. Device according to claim 1, the first Cardan joint (26; 126) being connected to the means for holding a first end of the test piece (27; 127; 28; 128), the means for holding a first end of the test piece (27; 127; 28; 128) comprising at least one member (28; 128) provided with a bore (127) intended to receive an end of a test piece.

6. Device according to one of the preceding claims, the converting means (16) for converting a translational movement of said pulling means (25) into a rotational movement comprising a wheel (24), the first Cardan joint (26) connecting the wheel (24) and the means for holding a first end of the test piece (27; 127; 28).

7. Device according to one of the preceding claims, the first cardan joint (126) being connected to at least one structure (128) that passes through the converting means (116) for converting a translational movement of said pulling means (25) into a rotational movement.

8. Device according to the preceding claim, with the structure (128) comprising two branches (1281) arranged as a fork, the converting means (116) for converting a translational movement of said pulling means (25) into a rotational movement comprising a wheel (124), the wheel (124) being provided with two through-openings (1241), with each branch (1281) passing through one of the two respective openings (1241).

9. Device according to one of claims 7 and 8, with the structure (128) further comprising means for balancing (1282), for example at least one balancing weight.

10. Device according to one of the preceding claims, further comprising means for measuring a force exerted on the pulling means (25) or means for measuring a torsion force on a downstream member (28; 128) to which is connected the first cardan joint (26; 126).

11. Bending mechanical test system, comprising a pulling machine and a mechanical four-point bending test device (10; 11; 12) according to one of claims 1 to 10, with the pulling machine comprising a pulling mechanism connected to the pulling means (25) of the test device, with the mechanism being configured to apply a pulling force on these pulling means.

12. Method for performing a mechanical four-point bending test on a test piece using a bending mechanical test device according to one of claims 1 to 10, comprising the steps of:
- setting up the test piece in the means for holding a first end of a test piece (27, 273; 127) and in the means for holding a second end of the test piece (30, 31),
- application of a tension on the pulling means,
- determining the bending moment by means for measuring a force exerted on the pulling means (25) or by means for measuring a torsion force on a downstream member (28; 128) to which is connected the first Cardan joint (26; 126).

13. Method according to the preceding claim, with the setting up of the test piece comprising the steps of:
- tightening a first ring (100) on a first end of the test piece, against the means for holding the first end of a test piece (27, 273; 127),
- tightening a second ring (100) on a second end of the test piece, against the means for holding the second end of the test piece (30, 31), with the first and the second ring (100) being tightened on the respective ends of the test piece outside the zone between the means for holding the first and the second end of the test piece.

14. Method according to one of claims 12 or 13, wherein the test piece is slender.

15. Method according to one of claims 13 or 14, wherein the test piece reaches a surface deformation of at least 3% or of at least 5%.
